(19) Europäisches Patentamt

European Patent Office

Office européen des brevets

(11) Veröffentlichungsnummer: **0 253 120 B1**

(12) **EUROPÄISCHE PATENTSCHRIFT**

(45) Veröffentlichungstag der Patentschrift: **19.08.92**

(21) Anmeldenummer: **87108008.1**

(22) Anmeldetag: **03.06.87**

(51) Int. Cl.⁵: **H01H 71/02**, H01H 83/20

(54) **Selbstschalterblock.**

(30) Priorität: **11.06.86 DE 3619675**

(43) Veröffentlichungstag der Anmeldung:
**20.01.88 Patentblatt 88/03**

(45) Bekanntmachung des Hinweises auf die
Patenterteilung:
**19.08.92 Patentblatt 92/34**

(84) Benannte Vertragsstaaten:
**AT BE CH DE FR IT LI NL**

(56) Entgegenhaltungen:
**EP-A- 0 156 184**
**DE-B- 2 115 034**
**DE-C- 865 760**

(73) Patentinhaber: **Asea Brown Boveri Aktiengesellschaft
Kallstadter Strasse 1
W-6800 Mannheim-Käfertal(DE)**

(72) Erfinder: **Goehle, Rolf
Im Bubenwingert 16
W-6906 Leimen(DE)**
Erfinder: **Schmitt, Volker
Ringstrasse 41
W-6901 Bammental(DE)**

(74) Vertreter: **Rupprecht, Klaus, Dipl.-Ing. et al
c/o BBC Brown Boveri Aktiengesellschaft
ZPT Postfach 100351 Kallstadter Strasse 1
W-6800 Mannheim 1(DE)**

## Beschreibung

Die Erfindung betrifft einen Selbstschalterblock nach dem Oberbegriff des Anspruches 1.

Ein derartiger Selbstschalterblock ist aus der DE-A-21 15 034 bekannt geworden.

Es ist bekannt, Selbstschalter für Überstrom- und Kurzschlußstromauslösung, sog. Leitungsschutzschalter, zur Absicherung von elektrischen Leitungen vorzusehen. Ebenso ist bekannt, Selbstschalter für Fehlerstromauslösung, sog. Fehlerstromschutzschalter, als weitere Schutzmaßnahme vorzusehen.

Zum Zweck einer vereinfachten Installation werden solche Selbstschalter auch zu Selbstschalterblöcken zusammengefaßt. Hierbei werden ein oder mehrere Leitungsschutzschalter, abhängig von der Zahl der abzusichernden Phasen, und ein Fehlerstromschutzschalter werkseitig zu einem gemeinsamen Schalterblock zusammengesetzt, die nur komplett installiert werden können.

Es ist nicht auszuschließen, daß sich erst während der Installation der Schutzmaßnahmen herausstellt, daß neben den vorgesehenen Leitungsschutzschaltern auch ein Fehlerstromschutzschalter zu installieren ist. Für solche Fälle muß ein separater Fehlerstromschutzschalter zur Verfügung stehen, der auch nachträglich an vorhandene Leitungsschutzschalter anbaubar ist. Üblicherweise stehen die Fehlerstromschutzschalter in zwei Leistungsgruppen zur Verfügung. Eine Leistungsgruppe betrifft Fehlerstromschutzschalter für Nennströme bis maximal 40 Ampere, die andere Gruppe umfaßt Fehlerstromschutzschalter für Nennströme über 40 Ampere. Bei der Zuordnung eines Fehlerstromschutzschalters zu einem Leitungsschutzschalter muß ausgeschlossen werden, daß ein Fehlerstromschutzschalter der ersten Gruppe, d. h. für niedrige Stromstärke, an einen Leitungsschutzschalter hoher Stromstärke angekoppelt wird. Ein hierfür vorgesehener Fehlerstromschutzschalter muß so beschaffen sein, daß durch seinen nachträglichen Einbau keine Probleme resultieren.

Aus der DE-C 865 760 ist ein Selbstschalter bekannt geworden, der als Schraubstöpselsicherung ausgebildet ist und Unverwechselbarkeitsmerkmale dahingehend aufweist, daß der Fuß des Schraubstöpselautomaten bzw. der Schraubstöpselsicherung je nach Nennstromstärke unterschiedlich bemessen ist und in einen Sockel eingeführt wird, der auf die entsprechende Nennstromstärke derart angepaßt ist, daß bei nicht zugelassenen Paarungen von Schraubstöpselselbstschalter bzw. Schraubstöpselsicherung und Sockel eine Kontaktierung des Fußes der Sicherung bzw. des Automaten mit einer entsprechenden Elektrode am Sockel nicht möglich ist. Wie ein Fehlerstromschutzschalter mit einem derartigen Schraubstöpselselbstschalter oder -sicherung zu einem Selbstschalterblock zusammengebaut werden kann, ist nicht aus der Druckschrift zu entnehmen.

Aufgabe der Erfindung ist es, einen Selbstschalterblock der eingangs genannten Art zu schaffen, der einfach aufgebaut und kostengünstig herstellbar und unter Ausschluß der unzulässigen Zuordnung von Selbstschaltern verschiedener Leistungsgruppen zueinander jederzeit einfach montierbar ist.

Diese Aufgabe wird erfindungsgemäß durch die kennzeichnenden Merkmale des Anspruches 1 gelöst.

Im Hinblick auf platzsparende Installation werden Selbstschalter in einer Installationsanlage ohne seitlichen Abstand dicht nebeneinander angeordnet. Dieses macht sich die Erfindung derart zunutze, daß nur bei einer zulässigen Kombination von Leitungsschutzschaltern mit Fehlerstromschutzschaltern beide ohne Zwischenraum aneinander fügbar sind, nicht jedoch aber bei einer unzulässigen Kombination von Selbstschaltern.

Dies beruht erfindungsgemäß darauf, daß, wegen der bereits erwähnten unterschiedlichen, von der Nennstromstärke des Selbstschalters abhängigen Länge der Steckzapfen bzw. der Steckbohrungen der Selbstschalter, diese nur dann ohne Zwischenraum nebeneinander angeordnet werden können, wenn die Nennstromstärke des Fehlerstromschutzschalters der des zugeordneten Leitungsschutzschalters entspricht.

Eine besonders vorteilhafte Ausgestaltung kann dahin gehen, daß ein Fehlerstromschutzschalter für niedrige Nennströme, beispielsweise Nennströme, die kleiner 40 Ampere sind, etwa doppelt so lange zapfenförmige Ansätze aufweisen wie ein Fehlerstromschutzschalter für höhere Nennströme, beispielsweise Nennströme größer 40 Ampere. Darüberhinaus beträgt bei einer besonderen Ausgestaltung der Erfindung die axiale Erstreckung der Ausnehmungen im Leitungsschutzschalter für hohe Nennströme, also Nennströme größer 40 Ampere, die halbe Gehäusedicke des Leitungsschutzschalters und bei einem Leitungsschutzschalter für niedrige Nennströme, also für Nennströme kleiner 40 Ampere, erstrecken sich die Ausnehmungen über die gesamte Gehäusedicke des Leitungsschutzschalters.

Wenn nur ein Fehlerstromschutzschalter für geringere Nennströme (kleiner als 40 Ampere) mit einem Leitungsschutzschalter für größere Nennströme (größer als 40 Ampere) zusammengesetzt wird, dann können die längeren Steckzapfen nicht vollständig in die Ausnehmungen eingeschoben werden, weswegen zwischen beiden ein sichtbarer Abstand bleibt. Hieraus ist die Unzulässigkeit der Kombinierung ersichtlich.

Mit Hilfe der Erfindung ist also ein sicherer Anbau von nachträglich zu installierenden Fehlerstromschutzschaltern an vorhandene Leitungsschutzchalter möglich.

Ein weiterer Vorteil, der sich mit der Erfindung verbindet, beruht darin, daß die Steckzapfen gleichzeitig eine Zentrierung für die Zuordnung der Selbstschalter zueinander bewirken.

Gemäß der Erfindung sind die Steckzapfen fest mit dem Gehäuse des Fehlerstromschutzschalter verbunden. Vorzugsweise können die Steckzapfen einstückig an dem aus einer Isolierstoffmasse bestehenden Gehäuse angeformt sein.

Gemäß einer anderen Ausgestaltung der Erfindung ist vorgesehen, daß die Steckzapfen als sog. Hülsenschrauben im Fehlerstromschutzschalter fest integriert sind. Der Vorteil dieser Ausgestaltung besteht darin, daß für Fehlerstromschutzschalter beider Leistungsgruppen die gleichen Gehäuse zum Einsatz gelangen können, wobei lediglich die Länge der Hülsenschrauben auf die jeweilige Nennstromstärke abgestimmt ist.

Erfindungsgemäß erhält danach ein solcher Fehlerstromschutzschalter der ersten Gruppe, d. h. für niedrige Nennströme, eine um ein bestimmtes Maß gegenüber der Länge der Hülsenschraube für Fehlerstromschutzschalter für höhere Nennströme verlängerte Hülsenschraube.

Weitere vorteilhafte Ausgestaltungen der Erfindung sind den weiteren Unteransprüchen zu entnehmen.

Anhand der Zeichnung, in der zwei Ausführungsbeispiele der Erfindung schematisch dargestellt sind, sollen die Erfindung sowie weitere vorteilhafte Ausgestaltungen und Verbesserungen näher erläutert und beschrieben werden.

Es zeigen:

Figur 1    einen Querschnitt durch eine Schalterkombination für hohe Stromstärke;

Figur 2    einen Querschnitt durch eine Schalterkombination für niedrige Stromstärke und

Figur 3    eine Seitenansicht eines Leitungsschutzschalters mit Aufnahmebogen.

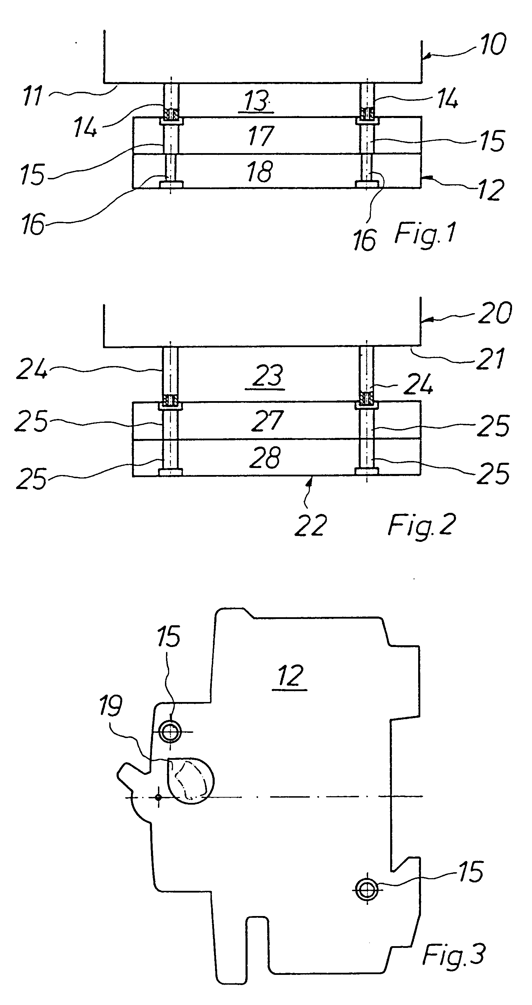

In Figur 1 ist ein Selbstschalterblock mit einem Fehlerstrom-Schutzschalter 10 für hohe Stromstärke und einem Leitungsschutzschalter 12 gezeigt, bei welchem zapfenartige Ansätze 14 (im folgenden Steckzapfen 14 genannt) des Fehlerstrom-Schutzschalters 10 teilweise in Aufnahmebohrungen 15 des Leitungsschutzschalters 12 eingeführt sind. Die Aufnahmebohrungen erstrecken sich über die Dicke einer Gehäuseschale 17, welche mit einer weiteren Gehäuseschale 18 das Gehäuse für einen Leitungsschutzschalter 12 bildet. In der Gehäuseschale 18 sind koaxial mit den Aufnahmebohrungen 15 in der Gehäuseschale 17 Bohrungen 16 vorgesehen, welche aufgrund ihres kleineren Querschnittes das Eindringen der Steckzapfen 14 verhindern.

Die Länge der Steckzapfen 14 entspricht der Tiefe der Aufnahmebohrungen 15, so daß nach vollständiger Einführung der Steckzapfen 14 in die Aufnahmebohrungen 15 der in der Fig. 1 erkennbare Zwischenraum 13 zwischen dem Fehlerstrom-Schutzschalter 10 und dem Leitungsschutzschalter 12 verschwindet und beide Schalter sich ohne Abstand nebeneinander befinden.

In Fig. 2 ist eine ähnliche Anordnung wie in Fig. 1 gezeigt, jedoch mit dem Unterschied, daß es sich hierbei um Selbstschalter für niedrige Nennstromstärke handelt. An dem Fehlerstrom-Schutzschalter 20 ist eine Seitenfläche 21 mit Zwei Steckzapfen 24 vorgesehen, die zum Teil in Aufnahmebohrungen 25 eines aus zwei schalenförmigen Gehäuseteilen 27,28 eines Leitungsschutzschalters 22 eingeführt sind. Die Aufnahmeborung 25 erstreckt sich hierbei über die gesamte Gehäuse dicke, d. h. sowohl die Gehäuseschale 27 als auch die Gehäuseschale 28 sind von der Aufnahmebohrung 25 durchsetzt. Der Querschnitt der Aufnahmebohrung 25 ist so festgelegt, daß der Steckzapfen 24 ohne großes Spiel gleitend eingeführt werden kann.

In Fig. 3 ist die Seitenansicht eines Leitungsschutzschalters 12 wiedergegeben, aus der die Lageanordnung der erfindungsgemäßen Aufnahmebohrungen 15 sowie einer Kupplungsstelle 19 für die gemeinsame Betätigung nebeneinander liegender Selbstschalter ersichtlich ist.

Die Aufnahmebohrungen 15 sind im wesentlichen diagonal auf der Seitenfläche angeordnet, d. h. jeweils an der Vorderseite im oberen Bereich und an der Rückseite im unteren Bereich. Mit Vorderseite ist hier die Seite gemeint, die das Betätigungsorgan, z.B. Schalthebel, aufweist, während als Rückseite die Seite bezeichnet ist, welche zur Befestigung des Leitungsschutzschalters vorbereitet ist.

Hierdurch ist gewährleistet, daß ein an den Leitungsschutzschalter anzuschließender, hier nicht gezeigter Fehlerstrom-Schutzschalter, lagerichtig zugeordnet wird.

Die ebenfalls gezeigte Kupplungsstelle 19 dient dazu, die Schaltschlösser von nebeneinander angeordneten Selbstschaltern formschlüssig miteinander zu verbinden. Hierzu ist im Gehäuse des Selbstschalters jeweils eine entsprechende Ausnehmung vorgesehen.

Die erfindungsgemäße Anwendung der vorbeschriebenen Merkmale ist wie folgt vorgesehen. Ein Fehlerstrom-Schutzschalter 20 einererstn Leistungsgruppe mit Nennströmen bis maximal 40 Ampere ist an eine vorhandene Anordnung von Leitungsschutzschaltern 22 anzukoppeln. Hierzu wird der Fehlerstrom-Schutzschalter 20 mit seiner Seitenfläche 21, aus welcher die Steckzapfen 24 herausragen, seitlich an den zugeordneten Leitungschutzschalter 22 herangeführt und in seiner Lage so ausgerichtet, daß die Steckzapfen 24 den hierfür vorgesehenen Aufnahmebohrungen 25 stirnseitig gegenüberliegen. Nunmehr kann der Fehlerstrom-Schutzschalter so durch Einschieben der Steckzapfen 24 in die Aufnahmebohrungen 25 dicht an den Leitungsschutzschalter 22 abstandslos herangeführt werden. Sollte versehentlich eine falsche Zuordnung von Selbstschaltern erfolgt sein, so wird dies spätestens bei der Montage der beiden zugeordneten Selbstschalter bemerkt werden.

Ist z. B. ein Fehlerstrom-Schutzschalter 10 einer zweiten Leistungsgruppe mit Nennströmen über 40 Ampere erforderlich, weil die Nennstromstärke der zugeordneten Leitungsschutzschalter 12 ebenfalls über 40 Ampere liegt, und ist versehentlich stattdessen ein Leitungsschutzschalter 22 der ersten Leistungsgruppe mit Nennströmen bis maximal 40 Ampere geliefert worden, so ist bei der Montage der Selbstschalter offenkundig, daß hier eine unzulässige Kombination von Selbstschaltern vorliegt. Wie aus dem vorhergehenden erkennbar, wird sich der fälschlicherweise vorgesehene Fehlerstrom-Schutzschalter 20 aufgrund seiner langen Steckzapfen 24 nicht bündig an den zugeordneten Leitungsschutzschalter 12 heranführen lassen Da dessen Aufnahmebohrungen 15 kürzer sind als die Einstecktiefe der Einsteckzapfen 14, bleibt ein gewisser Abstand zwischen beiden Schaltern, welcher die Unzulässigkeit dieser Schalterkombination anzeigt. Andererseits bestehen keine Bedenken, einen Fehlerstrom-Schutzschalter der zweiten Leistungsgruppe mit Nennströmen über 40 Ampere mit Leitungsschutzschaltern geringerer Stromstärke zu kombinieren. Dies findet seinen Niederschlag darin, daß die Fehlerstromschutzschalter für höhere Nennstromstärken mit kurzen Steckzapfen versehen sind, welche problemlos in die Aufnahmebohrungen von Leitungsschutzschaltern geringerer Nennstromstärke eingeführt werden können, da diese sich über die gesamte Gehäusedicke erstrekken.

## Patentansprüche

1.  Selbstschalterblock für Überstrom-, Kurzschlußstrom- und Fehlerstromauslöser mit einem als Leitungsschutzschalter (12, 22) ausgebildeten Selbstschalter für Überstrom- und Kurzschlußstromauslöser und mit einem als Fehlerstrom-(FI)Schutzschalter (10, 20) ausgebildeten Selbstschalter für Fehlerstromauslösung, dadurch gekennzeichnet, daß der Fehlerstrom-Schutzschalter (10, 20) auf einer Seitenfläche (11, 21) wenigstens einen zapfenförmigen Ansatz (14, 24) und der Leitungsschutzschalter (12, 22) eine der Anzahl der Ansätze (14, 24) am Fehlerstrom-Schutzschalter (10, 20) entsprechende Anzahl von Ausnehmungen (15, 25) aufweisen, wobei die Ansätze (14, 24) in die Ausnehmungen (15, 25) wenigstens teilweise einfügbar sind, daß die Länge der Ansätze (14, 24) und der Querschnitt der Ausnehmungen (15, 25) auf die Nennstromstärke des Fehlerstrom- bzw. Leitungsschutzschalters (10, 20; 12, 22) abgestimmt sind, wobei die Länge der Ansätze (14) bei einem Fehlerstromschutzschalter (10) mit einer höheren Nennstromstärke kleiner ist als die eines Fehlerstromschutzschalters (20) mit einer niedrigeren Nennstromstärke und die Querschnitte der Ausnehmungen (15) bei einem Leitungsschutzschalter (12) mit einer höheren Nennstromstärke in ihrer axialen Erstrekkung gestuft sind, so daß der längere Ansatz (24) des Fehlerstromschutzschalters (20) mit der niedrigeren Nennstromstärke gegen die Querschnittsverengung (16) der Ausnehmung des Leitungsschutzschalters (12) mit höherer Nennstromstärke anschlägt und so ein dichtes Zusammenfügen von Fehlerstromschutzschalter (20) und Leitungsschutzschalter (12) verhindert ist, der Ansatz (14) eines Fehlerstromschutzschalters (10) mit höherer Nennstromstärke aber behinderungsfrei in die Ausnehmung (15, 25) eines Leitungsschutzschalters mit gleicher oder kleinerer Nennstromstärke einfügbar ist.

2.  Selbstschalterblock nach Anspruch 1, dadurch gekennzeichnet, daß Fehlerstromschutzschalter (20) für niedrige Nennströme, z.B. $I_N \leq 40$ A, etwa doppelt so lange zapfenförmige Ansätze (24) aufweisen wie Fehlerstromschutzschalter (10) für hohe Nennströme, z.B. $I_N \geq 40$ A.

3.  Selbstschalterblock nach Anspruch 1, dadurch gekennzeichnet, daß die axiale Erstreckung der Ausnehmungen (15) im Leitungsschutzschalter (12) für hohe Nennströme, z.B $I_N \geq 40$ A, die halbe Gehäusedicke des Leitungsschutzschalters (12) beträgt und daß bei Leitungsschutzschaltern (22) für niedrige Nennströme, z.B. $I_N \leq 40$ A, die Ausnehmungen (25) sich über die gesamte Gehäusedicke des Leitungsschutzschalters (22) erstrecken.

4.  Selbstschalterblock nach Anspruch 1, dadurch gekennzeichnet, daß der zapfenförmige Ansatz (14, 24) einstückig mit dem Gehäuse des Fehlerstromschutzschalters (10, 20) verbunden ist.

5.  Selbstschalterblock nach Anspruch 1, dadurch gekennzeichnet, daß der zapfenförmige Ansatz (14, 24) ein aus einer Hülsenschraube gebildeter Steckzapfen ist, der unverlierbar in das Gehäuse des Fehlerstromschutzschalters (10, 20) eingesetzt ist.

6. Selbstschalterblock nach einem der vorherigen Ansprüche, dadurch gekennzeichnet, daß die zapfenförmigen Ansätze (14, 24) und die hierfür vorgesehenen Ausnehmungen (15, 25) diagonal zueinander auf den Seitenflächen der Selbstschalter angeordnet sind.

7. Selbstschalterblock nach einem der vorherigen Ansprüche, dadurch gekennzeichnet, daß die als Steckzapfen ausgebildeten zapfenförmigen Ansätze (14, 24) formschlüssig in die Ausnehmungen (15, 25) greifen, wobei hierdurch die beiden Selbstschalter (10, 12, 20, 22) sich aufeinander ausrichten.

## Claims

1. Automatic circuit-breaker block for overcurrent, short-circuit current and fault current trips, comprising an automatic circuit breaker, constructed as line-protection breaker (12, 22) for overcurrent and short-circuit current trips and with an automatic circuit breaker for fault-current tripping, constructed as fault-current (FI) protection breaker (10, 20), characterised in that the fault-current protection breaker (10, 20) has at least one pin-shaped projection (14, 24) on one side face (11, 21) and the line protection breaker (12, 22) has a number of recesses (15, 25) corresponding to the number of projections (14, 24) on the fault-current protection breaker (10, 20), the projections (14, 24) being at least partially insertable into the recesses (15, 25), in that the lengths of the projections (14, 24) and the cross-section of the recesses (15, 25) are adapted for the rated current intensity of the fault-current and line protection breaker (10, 20; 12, 22), respectively, the length of the projections (14) being less in the case of a fault-current protection breaker (10) with a higher rated current intensity than that of a fault-current protection breaker (20) with a lower rated current intensity and the cross-sections of the recesses (15) in the case of a line protection breaker (12) with a higher rated current intensity being stepped in their axial extent, so that the longer projection (24) of the fault-current protection breaker (20) with the lower rated current intensity abuts the cross-sectional narrowing (16) of the recess of the line protection breaker (12) having the higher rated current intensity and thus a close joining of fault-current protection breaker (20) and line protection breaker (12) is prevented, but the projection (14) of a fault-current protection breaker (10) having a higher rated current intensity can be inserted without impediment into the recess (15, 25) of a line protection breaker having the same or lower rated current intensity.

2. Automatic circuit-breaker block according to Claim 1, characterised in that fault-current protection breakers (20) for low rated currents, for example $I_N \leq 40A$, have pin-shaped projections (24) of at least twice the length as fault-current protection breakers (10) for high rated currents, for example $I_N \geq 40A$.

3. Automatic circuit-breaker block according to Claim 1, characterised in that the axial extent of the recesses (15) in the line protection breaker (12) for high rated currents, for example $I_N \geq 40A$, amounts to half the thickness of the housing of the line protection breaker (12) and in that in the case of line protection breakers (22) for low rated currents, for example $I_N \leq 40A$, the recesses (25) extend over the entire thickness of the housing of the line protection breaker (22).

4. Automatic circuit-breaker block according to Claim 1, characterised in that the pin-shaped projection (14, 24) is integrally connected with the housing of the fault-current protection breaker (10, 20).

5. Automatic circuit-breaker block according to Claim 1, characterised in that the pin-shaped projection (14, 24) is a plug-in pin formed from a sleeve-type screw which is captively inserted into the housing of the fault-current protection breaker (10, 20).

6. Automatic circuit breaker block according to one of the preceding claims, characterised in that the pin-shaped projections (14, 24) and the recesses (15, 25) provided therefor are arranged diagonally with respect to one another on the side faces of the automatic circuit breakers.

7. Automatic circuit-breaker block according to one of the preceding claims, characterised in that the pin-shaped projections (14, 24) constructed as plug-in pins positively engage in the recesses (15, 25), the two automatic circuit breakers (10, 12, 20, 22) aligning themselves to one another as a result.

## Revendications

1. Bloc déclencheur automatique pour déclencheur de surcharge, déclencheur de court-circuit et déclencheur de courant de défaut comportant un déclencheur automatique agencé en disjoncteur de protection de ligne (12, 22) pour le déclenchement par courant de surcharge et par courant de court-circuit et un déclencheur automatique agencé en disjoncteur de courant de défaut (10, 20) pour le déclenchement par courant de défaut, caractérisé en ce que le disjoncteur de courant de défaut (10, 20) est muni sur l'une de ses faces latérales (11, 21) d'au moins un pied (14, 24) et le disjoncteur de protection de ligne (12, 22) présente des cavités (15, 25) en nombre correspondant au nombre de pieds (10, 20), les pieds (14, 24) pouvant être engagés au moins partiellement dans les cavités (15, 25), en ce que la longueur des pieds (14, 24) et la section des cavités (15, 25) sont adaptées à l'intensité nominale du disjoncteur de courant de défaut ou disjoncteur de protection de ligne (10, 20 ; 12, 22), la longueur des pieds (14) étant plus faible dans le cas d'un disjoncteur de courant de défaut (10) pour intensité nominale élevée que dans le cas d'un disjoncteur de courant de défaut (20) pour faible intensité nominale et les sections des cavités (15), dans le cas d'un disjoncteur de protection de ligne (12) pour intensité nominale élevée, étant étagées dans la direction axiale de manière telle que le pied plus long (24) du disjoncteur de courant de défaut (20) pour faible intensité nominale vienne en butée contre la réduction de section (16) de la cavité du disjoncteur de protection de ligne (12) pour intensité nominale élevée et empêche ainsi l'assemblage complet du disjoncteur de courant de défaut (20) et du disjoncteur de protection de ligne (12), mais que le pied (14) d'un disjoncteur de courant de défaut (10) pour intensité nominale élevée puisse s'engager sans rencontrer d'obstacle dans la cavité (15, 25) d'un disjoncteur de protection de ligne de même intensité ou d'intensité plus faible.

2. Bloc déclencheur automatique selon la revendication 1, caractérisé en ce que les disjoncteurs de courant de défaut (20) pour faible intensité, par exemple $I_N \leq 40$ A, sont munis de pieds (24) environ deux fois plus longs que les disjoncteurs de courant de défaut (10) pour intensité élevée, par exemple $I_N \geq 40$ A.

3. Bloc déclencheur automatique selon la revendication 1, caractérisé en ce que la longueur axiale des cavités (15) dans le disjoncteur de protection de ligne (12) pour intensités élevées, par exemple $I_N \geq 40$ A, est égale à la moitié de l'épaisseur du boîtier du disjoncteur de protection de ligne (12) et en ce que, dans le cas de disjoncteurs de protection de ligne (22) pour faibles intensités, par exemple $I_N \leq 40$ A, les cavités (25) s'étendent sur l'ensemble de l'épaisseur du boîtier du disjoncteur de protection de ligne (22).

4. Bloc déclencheur automatique selon la revendication 1, caractérisé en ce que le pied (14, 24) est formé d'une pièce avec le boîtier du disjoncteur de courant de défaut (10, 20).

5. Bloc déclencheur automatique selon la revendication 1, caractérisé en ce que le pied (14, 24) est un têton d'emboîtement formé d'une douille filetée qui est montée de manière imperdable dans le boîtier du disjoncteur de courant de défaut (10, 20).

6. Bloc déclencheur automatique selon l'une des revendications précédentes, caractérisé en ce que les pieds (14, 24) et les cavités (15, 25) destinées à les recevoir sont disposés en diagonale sur les faces latérales des déclencheurs automatiques.

7. Bloc déclencheur automatique selon l'une des revendications précédentes, caractérisé en ce que les pieds (14, 24) agencés en têtons d'emboîtement s'engagent par conjugaison de forme dans les cavités (15, 25), les deux déclencheurs automatiques (10, 12, 20, 22) s'alignant entre eux.

Fig.1

Fig.2

Fig.3